(19) Europäisches Patentamt
European Patent Office
Office européen des brevets

(11) EP 0 504 058 B1

(12) **FASCICULE DE BREVET EUROPEEN**

(45) Date de publication et mention de la délivrance du brevet:
**13.05.1998 Bulletin 1998/20**

(51) Int Cl.[6]: **C08G 69/44**

(21) Numéro de dépôt: **92400655.4**

(22) Date de dépôt: **12.03.1992**

# (54) Procédé de synthèse de polyéther bloc amides

Verfahren zur Herstellung von Polyätheramideblockpolymeren

Process for preparing polyether-amide block polymers

(84) Etats contractants désignés:
**AT BE CH DE DK ES FR GB GR IT LI LU MC NL PT SE**

(30) Priorité: **15.03.1991 FR 9103175**

(43) Date de publication de la demande:
**16.09.1992 Bulletin 1992/38**

(73) Titulaire: **ELF ATOCHEM S.A.**
**92800 Puteaux, Hauts-de-Seine (FR)**

(72) Inventeurs:
- **Maj, Philippe**
**F-27230 Thiberville (FR)**
- **Forichon, Noelle**
**F-27110 le Neubourg (FR)**

(74) Mandataire: **Neel, Henry et al**
**Elf Atochem S.A.,**
**4-8, Cours Michelet,**
**La Défense 10**
**F-92800 Puteaux (FR)**

(56) Documents cités:
**EP-A- 0 025 487** **EP-A- 0 025 828**
**FR-A- 2 273 021** **FR-A- 2 378 058**
**FR-A- 2 401 947** **FR-A- 2 470 141**
**FR-A- 2 555 186** **GB-A- 2 087 912**
**JP-A-63 048 332**

- **PATENT ABSTRACTS OF JAPAN, vol. 12, no. 263 (C-514), 22 juillet 1988; & JP-A-63 048 332 (ASAHI CHEM.) 01-03-1988 (Cat. D)**
- **PATENT ABSTRACTS OF JAPAN, vol. 12, no. 462 (C-549), 5 décembre 1988; & JP-A-63 182 343 (ASAHI CHEM.) 27-07-1988 (Cat. D)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 504 058 B1

Printed by Jouve, 75001 PARIS (FR)

## Description

La présente invention concerne un procédé de synthèse de polymères séquences comprenant des séquences polyéther et des séquences oligoamides qui sont appelés également polyéther bloc amides.

Dans la littérature, on trouve de nombreuses références concernant les polyéther bloc amides.

Dans les brevets FR 2.273.021 et FR 2.401.947 au nom de la demanderesse sont décrits des polyétheramides de formule

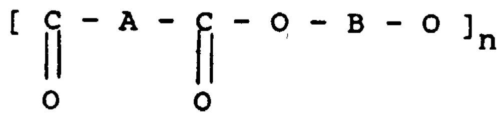

dans laquelle A représente une séquence polyamide, B une séquence polyéther aliphatique.

Ils sont obtenus par réaction à l'état fondu d'un polyamide dicarboxylique de Mn compris entre 300 et 15000 et un polyétherdiol de Mn compris entre 200 et 6000 sous vide poussé à des températures comprises entre 100 et 400°C en présence d'un ou plusieurs tétraalcoxydes métalliques de formule $M(OR)_4$ comme catalyseur où M représente le titane, le hafnium ou le zirconium et R un radical hydrocarboné ayant de 1 à 24 atomes de carbone.

Ces polyéther bloc amides présentent de bonnes propriétés mécaniques et chimiques.

Dans le brevet FR 2.384.810, on a décrit des polyéther ester amides, obtenus par polymérisation sous pression autogène à des températures comprises entre 230 et 300°C d'un mélange constitué

- d'un ou plusieurs monomères de polyamide
- d'un alpha, oméga-dihydroxy (polytétrahydrofurane) ou PTMG de Mn compris entre 160 et 3000
- et d'au moins un diacide en présence d'eau, l'eau est ensuite éliminée du milieu réactionnel qui est ensuite ramené à pression normale ou réduite à une température comprise entre 250 et 280°C.

Les produits obtenus sont également des polymères séquencés ou blocs et présentent une bonne résistance au choc à froid.

Toutefois, les polymères obtenus à partir d'un même polyétherdiol donné selon ces brevets ont, pour une même dureté, une température de fusion plus faible que ceux conformes à l'invention.

De plus, les polyéther bloc amides selon l'invention possèdent un rigidité plus faible aux basses températures que les polyéther bloc amides de même point de fusion et de même dureté shore D que ceux obtenus selon les procédés décrits dans FR 2.273.021, FR 2.401.947 ou FR 2.384.810.

Le brevet DE 3.428.405 décrit des produits similaires aux précédents mais de stabilité à l'hydrolyse améliorée obtenus à partir d'un mélange stoechiométrique d'oligoamide diacide et d'oligoéther diol et de 3 à 30 % en mole par rapport au mélange précédent de diol de faible masse.

La demande de brevet J63-048332 concerne des polyéther bloc amides à base de sels de nylon dont la compatibilité entre segments rigides et segments souples est améliorée par incorporation de diacides aliphatiques dans les polyéther diol (souples) avant de faire réagir les poyéthers diol ainsi modifiés avec les oligoamides diacides. Le point de fusion de ces produits pour une même séquence polyamide, décroît avec la dureté et le module. Des produits similaires sont décrits dans la demande de brevet J63-227238 et des procédés similaires dans les demandes de brevet J63-280736 et J63-105032.

La demande de brevet J63-182343 concerne des polyéther bloc amides obtenus par réaction à l'état fondu de séquences PA-6,6 à extrémités diamines et de polyéther à extrémités de chaîne dicarboxyliques. Le point de fusion des polymères obtenus selon cette demande varie dans le même sens que leur module de fexion et leur dureté.

La présente invention est un procédé de synthèse de polyéther bloc amides répondant à la formule générale suivante :

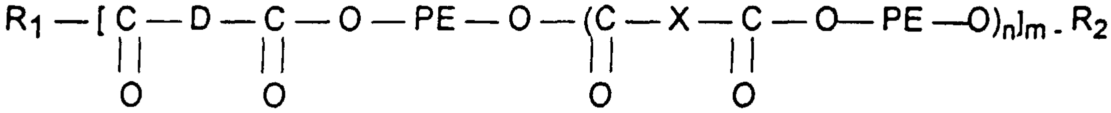

dans laquelle :

- D représente le reste d'un oligamide diacide de Mn compris entre 300 et 8000 et le reste du limitateur diacide,

- PE représente le reste d'un polyétherdiol de Mn compris entre 200 et 5000,
- X représente une chaîne hydrocarbonée (cyclo) aliphatique, aromatique, linéaire ou ramifiée contenant de 3 à 20 atomes de carbone,
- $R_1$ à $R_2$ représentent les extrémités de chaîne et sont respectivement OH et H,
- n est compris entre 0,1 et 10,
- m est en moyenne compris entre 2 et 50,

caractérisé en ce qu'il consiste à faire réagir à l'état fondu un oligoamide diacide A, au moins un oligoéther diol B et au moins un coupleur diacide C de Mn comprise entre 100 et 1000, en proportions permettant de former intermédiairement un triséquencé diol de formule :

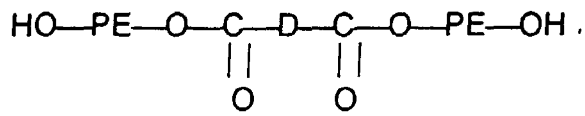

puis à faire réagir ce triséquencé avec la quantité restante de polyéther et avec le coupleur diacide, les pourcentages molaires respectifs totaux, a, b, et c étant tels que :

$$-5 \leq a + c - b \leq +5 \text{ et } c \geq 3.$$

Les polyéther bloc amides de l'invention dont le point de fusion est indépendant du module de flexion et de la dureté Shore D pour un même polyétherdiol sont des élastomères thermoplastiques dont les enchaînements les plus probables des différents blocs peuvent être représentés par la formule générale suivante :

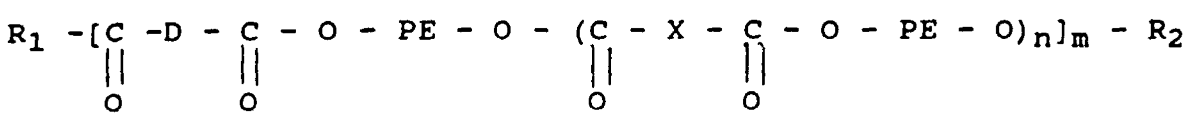

dans laquelle :

. D représente le reste d'un oligamide diacide de Mn compris entre 300 et 8000 et de préférence entre 500 et 5000 et/ou le reste du limitateur diacide,
. PE représente le reste d'un polyétherdiol de Mn compris entre 200 et 5000 et de préférence entre 200 et 3000,
. X représente le reste d'un coupleur diacide et est une chaîne hydrocarbonée, (cyclo) aliphatique, aromatique, linéaire ou ramifiée contenant de 3 à 20 atomes de carbone et de préférence de 4 à 12 atomes de carbone,
. $R_1$ et $R_2$ représentent les extrémités de chaîne et sont respectivement OH et H,
. n est compris entre 0,1 et 10 et de préférence entre 0,2 et 8 et avantageusement entre 0,5 et 6,
. m est en moyenne compris entre 2 et 50 et de préférence entre 5 et 20,

étant entendu que les polyéther bloc amides conformes à l'invention peuvent être constitués de blocs D, PE et de coupleurs diacides de nature différente. A titre d'exemple, on peut citer les polyéther bloc amides dont les blocs d'oligoamide sont constitués d'oligomères de PA-6 d'une part, et de PA-12 d'autre part.

Les oligoamides diacides utilisés peuvent être obtenus par polymérisation de lactames et/ou d'aminoacides, et éventuellement jusqu'à 50 % en poids d'un ou plusieurs diacides et d'une ou plusieurs diamines et/ou leurs sels en présence d'un limitateur de chaîne diacide. Les oligamides préférés sont ceux qui dérivent de caprolactame et/ou de dodécalactame (lauryllactame).

Parmi les limitateurs de chaîne diacide, on citera tout particulièrement les acides adipique et téréphtalique et de préférence l'acide dodécanedioïque.

A titre d'exemple de polyétherdiols, on peut citer le polyéthylène glycol (PEG), le polypropylène glycol (PPG), le polytétraméthylène glycol (PTMG), ainsi que les mélanges d'au moins deux des polyétherdiols précédents, le PEG et le PTMG seuls étant particulièrement préférés par la demanderesse.

A titre d'exemple de copolyétherdiols, on peut citer les copolymères statistiques et/ou séquencés d'éthylène glycol et/ou de 1,2- ou 1,3-propylène glycol et/ou de 1,2-,1,3- ou 1,4-butylène glycol.

Par polyétherdiols, on entend également les mélanges de polyétherdiols tels que définis ci-dessus avec d'autres

composés diols de Mn comprise en général entre 250 et 4000 et de préférence entre 600 et 3000, tels que le polyisoprène diol hydrogéné, le polybutadiène diol hydrogéné ou d'autres hydrocarbones diols.

Les coupleurs diacides utilisés de formule HOOCXCOOH signalés ont en général une Mn comprise entre 100 et 1000 et sont en général choisis parmi les acides adipique, isophtalique, azélaïque, sébacique, 4,4'-diphényl éther dicarboxylique, et de préférence l'acide dodécanedioïque.

La viscosité inhérente des polyéther bloc amides selon l'invention est en général comprise entre 0,6 et 3,5 dl/g, de préférence entre 0,8 et 2,5. Elle est mesurée à 25 °C dans le m-crésol avec une concentration initiale de 0,5 g de polymère pour 100 g de m-crésol.

Leur Mn est en général comprise entre 10 000 et 50 000 et de préférence entre 15 000 et 30 000.

On effectue en général la réaction sous pression réduite et en présence d'au moins un catalyseur d'estérification tel que, par exemple les alcoxydes d'aluminium, étain, antimoine, germanium, zirconium, titane et/ou hafnium, les tétrabutylates de zirconium et de titane, l'oxyde d'antimoine, le laurate d'hydroxy oxyde d'étain, seuls ou en mélange et/ou en présence notamment d'acide phosphorique.

Une variante du procédé selon l'invention consiste à préparer dans une première étape, l'oligoamide diacide en présence de tout ou partie du polyéther.

La réaction à l'état fondu s'effectue en général à une température comprise entre 150 et 300°C et de préférence entre 200 et 270 °C.

Les polyéther bloc amides selon l'invention peuvent être mis en oeuvre tels quels et conviennent pour la réalisation d'objets moulés, extrudés, de films, de gaines, de matériaux composites tels que films multi-couches. Ils peuvent également être mélangés avec d'autres polymères et en particulier avec des polyamides.

Certains polyéther bloc amides selon l'invention présentent des propriétés particulières.

A titre d'exemple, on peut citer les polyéther bloc amides dont les séquences polyéthers sont majoritairement constituées de PEG qui présentent d'excellentes propriétés d'antistatisme et de perméabilité aux gaz, seuls ou en mélange avec d'autres polymères tels que résine ABS, polycarbonate, polyphénylène éther, polyamide.

Parmi les polyéther bloc amides antistatiques, on préfère ceux dont les séquences oligoamide dérivent de PA-6. Parmi les polyéther bloc amides perméables aux gaz, on préfère ceux dont les séquences oligoamide dérivent de PA-12.

Les exemples suivants illustrent l'invention sans la limiter.

Pour chacun des produits obtenus, on détermine les caractéristiques suivantes :

- viscosité inhérente en solution à 0,5 g/dl dans le m-crésol à 25°C
- températures de fusion mesurées entre -30 et + 250°C à 20°C/mn sur la deuxième chauffe avec un appareil DSC-4 de la Société Perkin Elmer
- masses molaires moyennes en nombre Mn ou en poids Mw mesurées par GPC dans l'alcool benzylique à 130°C, en équivalent polyTHF.

Les exemples 1 à 42 ont été réalisés selon le mode opératoire général suivant :

On introduit 50 g des différents réactifs dans des proportions choisies et le catalyseur dans un réacteur en verre de 300 $cm^3$ muni d'une arrivée d'azote, d'un condenseur, d'un agitateur à ancre et d'un système de mise sous pression réduite. L'ensemble est purgé à l'azote puis mis sous vide (O,05-0,5mbars). Le réacteur est plongé dans un bain d'huile à 100 °C puis chauffé progressivement à 240°C en 30 mn. La vitesse d'agitation est de 60 trs/mn en début de chauffage puis 250 trs/mn à partir de 170°C. La température est maintenue en palier à 240°C pendant toute la durée de la réaction. Les effluents de polycondensation sont recueillis dans une recette refroidie à l'azote liquide en sortie de condenseur. En cours de réaction, la vitesse d'agitation est progressivement réduite jusqu'à 40 trs/mn lorsque la viscosité du milieu fondu augmente. La réaction est stoppée quand la viscosité du polymère devient trop élevée. En fin de réaction, le vide est compensé par de l'azote, le chauffage et l'agitation sont stoppés. Le polymère est refroidi sous balayage d'azote puis recueilli en cassant le tube.

Les coupleurs diacides utilisés dans les exemples sont :

- l'acide dodécanedioïque (DDA)
- l'acide adipique (AA)
- l'acide azélaïque (AZ)
- l'acide isophtalique (IA)

**Exemples 1 à 17**

Synthèse d'un triséquencé diol PTMG/PA-12/PTMG de Mn 3000

Dans un autoclave en acier inoxydable de 100 l muni d'un agitateur à ancre, on place 8,54 kg de lauryllactame, 1,46 kg d'acide adipique et 2,7 l d'eau. Après 5 purges à l'azote entre 10 bars et 50 mbars, on ferme le réacteur, la pression résiduelle étant égale à 2 bars d'azote. Le réacteur est mis en chauffe et le milieu réactionnel atteint 246 °C pour une pression de 37 bars en 135 mn, l'agitation (50 trs/mn) étant mise en route lorsque la température du réacteur atteint 230 °C.

Après 2 h dans ces conditions, le milieu est détendu à pression atmosphérique, la température étant de 240 °C. Le réacteur est alors placé sous balayage d'azote et on introduit 20 kg de PTMG de Mn 1000 préchauffé à 60 °C. La température du milieu est amenée à 247 °C et maintenue 3 h, après quoi on recueille dans l'azote liquide un oligomère contenant 0,74 meq/g de fonctions alcool, 0,08 meq/g de fonctions acides, soit de Mn 3000, et de point de fusion 143°C.

Synthèse du polyéther bloc amide selon l'invention

Suivant le mode opératoire général défini ci-dessus, on place 50 g des réactifs (triséquencé diol, polyéther diol et coupleur diacide ) dans les proportions indiquéees dans le tableau 1 et 0,15 g de catalyseur (solution de tétrabutylate de zirconium à 80 % dans le butanol). Dans le tableau 1 sont indiquées, pour chacun des exemples 1 à 17, outre les proportions des réactifs, la durée de réaction à 240 °C et les caractéristiques des élastomères thermoplastiques (points de fusion des phases polyamide et polyéther, viscosité inhérente, Mn déterminée par GPC).

Les polyétherdiols utilisés sont le polytétraméthylène glycol (PTMG), le polyéthylène glycol (PEG) et le polyisoprène diol hydrogéné (EPOL) de Mn indiquées dans le tableau 1.

**Exemples 18 à 21**

Synthèse d'un triséquencé PTMG/PA-12/PTMG de Mn 4000

De manière similaire aux exemples précédents, on fait réagir 13,9 kg de lauryllactame, 1,1 kg d'acide adipique et 2,7 l d'eau à 255 °C sous pression autogène de 33 bars pendant 3 h 30 ; puis le milieu réactionnel est ramené à pression atmosphérique sous balayage d'azote à 240 °C en 90 mn. On ajoute alors 15 kg de PTMG de Mn 1000 puis porte le milieu à 260 °C sous balayage d'azote pendant 4 h 30. On recueille dans l'azote liquide un oligomère contenant 0,54 meq/g de fonctions alcool, 0,04 meq/g de fonctions acide, soit de Mn 4000, et de point de fusion 161,5 °C.

Synthèse du polyéther bloc amide selon l'invention

Elle est identique à celle des produits des exemples 1 à 17 en utilisant le triséquencé de Mn 4000 défini ci-dessus. Les caractéristiques des produits obtenus et les durées de réaction sont indiquées dans le tableau 2.

**Exemples 22 à 27**

Les produits des exemples 22 à 27 sont préparés selon le mode opératoire des exemples 1 à 17 à partir de 50 g de réactifs (PA-12 diacide limité par l'acide adipique (AA), dodécanedioïque (DDA) ou téréphtalique (TA) de Mn comprises entre 900 et 4000, PTMG diol de Mn 1000 et coupleur diacide (DDA)) dans les proportions indiquées dans le tableau 3 et 0,15 g du même catalyseur que dans les exemples 1 à 17.

**Exemples 28 à 35**

Les élastomères thermoplastiques des exemples 28 à 35 sont préparés selon le mode opératoire des exemples 1 à 17 à partir de PA-12 de Mn 1000 limité DDA, de PTMG diol de Mn 1000 et d'acide dodécanedioïque (coupleur diacide). Les caractéristiques des produits obtenus et les durées de réaction sont indiquées dans le tableau 4.

**Exemples 36 à 40**

Les élastomères thermoplastiques des exemples 36 à 40 sont préparés selon le mode opératoire et dans les proportions de l'exemple 4 à partir d'un mélange comprenant 1 mole de triséquencé diol de Mn 3000 préparé dans les exemples 1 à 17 pour 2 moles de PTMG de Mn 1000 et 3 moles de coupleur diacide (DDA) ; leurs caractéristiques sont réunies dans le tableau 5 ; les systèmes catalytiques mis en oeuvre lors de la synthèse sont :

- pas de catalyseur (exemple 36 COMPARATIF)
- 0,3% d'oxyde d'antimoine $Sb_2O_3$ (exemple 37)
- 0,3% de butyl hydroxy oxyde d'étain BuSnO(OH) (exemple 38)
- 0,36 % de dibutyl oxyde d'étain $(Bu)_2SnO$ (exemple 39)
- 0,3 % de tétraacétylacétonate de zirconium (exemple 40)

**Exemples 41 et 42**

Les exemples 41 et 42 sont réalisés selon le mode opératoire des exemples 1 à 17 à partir d'un mélange comprenant 1 mole de PA diacide pour 4 moles de PTMG 1000 et 3 moles de DDA avec le même système catalytique. Les caractéristiques des élastomères thermoplastiques et les durées de réaction sont réunies dans le tableau 6.

**Exemple 43 (Comparatif)**

Selon le mode opératoire décrit dans le brevet FR 2 401 947, on introduit dans un réacteur en acier inoxydable de 100 l muni d'un agitateur à ancre 7,74 kg de caprolactame, 2,4 kg d'acide dodécanedioïque et 2 l d'eau. Après plusieurs purges à l'azote, le milieu est chauffé jusqu'à 230°C sous pression autogène de 23 bars et maintenu 30 mn dans ces conditions, l'agitation étant mise en route à partir de 200 °C.

On diminue la pression jusqu'à la pression atmosphérique en 90 mn et place le milieu sous balayage d'azote puis introduit 20,9 kg de PTMG de Mn 2000. Le milieu maintenu à 250°C sous courant d'azote est agité pendant 3 h puis la pression est progressivement réduite jusqu'à 50 mbars et la température jusqu'à 230°C. On ajoute ensuite 75 $cm^3$ d'une solution de $Zr(OBu)_4$ à 80 % dans le butanol. La température est alors portée à 240 °C et la pression réduite jusqu'à 1 mbar. Après 3 h de polycondensation dans ces conditions, le milieu réactionnel est ramené à pression atmosphérique par injection d'azote dans le réacteur et on recueille par extrusion 25 kg d'un élastomère thermoplastique dont les caractéristiques sont réunies dans le tableau 7.

**Exemple 44 (Comparatif)**

Selon le mode opératoire décrit dans le brevet FR 2 384 810, on place dans un autoclave en acier inoxydable de 100 l muni d'une agitation à ancre 4,7 kg de caprolactame, 4,73 kg d'acide dodécanedioïque, 20,55 kg de PTMG de Mn 1000 et 2 l d'eau. Après plusieurs purges à l'azote, l'ensemble est chauffé sous pression autogène (toutes vannes fermées) jusqu'à une température de 250°C en 2 h 30, l'agitation étant mise en route à partir de 220 °C, soit 1 h 45 après le début du chauffage. La pression qui s'établit au sein du réacteur est de 22 bars est ramenée en 110 mn à pression atmosphérique par détente progressive, la température étant ramenée à 240 °C.

On introduit sous balayage d'azote 24 g d'une solution aqueuse d'acide phosphorique à 84 % , puis les vannes étant fermées, réduit la pression à l'intérieur du réacteur jusqu'à $5,33.10^3$ Pa en 30 mn. La polycondensation est poursuivie dans ces conditions pendant 8 h puis pendant 7 h supplémentaires sous pression réduite de $1,07.10^3$ Pa. A l'issue de cette période, aucune augmentation notable du couple n'est décelée. Par extrusion, on obtient un élastomère thermoplastique dont les caractéristiques sont réunies dans le tableau 7.

**Exemple 45** (Comparatif)

Selon le mode opératoire décrit dans la demande J63-280736, on introduit dans un réacteur en acier inoxydable de 100 l muni d'une agitation à ancre, 7,8 kg de caprolactame, 1,2 kg d'acide dodécanedioïque, 2 l d'eau et 21 kg de PTMG de Mn 2000.

Après plusieurs purges à l'azote, le contenu est porté, toutes vannes fermées, à 240°C en 2 h, l'agitation étant mise en route à partir de 220°C. Une pression autogène de 17 bars est atteinte et maintenue 2 h à la même température. La détente à pression atmosphérique est effectuée en 2 h 30, la température étant portée à 250°C. Une fois la pression atmosphérique atteinte, le milieu est placé sous balayage d'azote et maintenu pendant 3 h à 250°C.

On introduit alors 1,2 kg d'acide dodécanedioïque et le milieu est porté progressivement en 30 mn sous une pression réduite de 40 mbars en réduisant la température à 240°C. Après 30 mn de réaction dans ces conditions, on introduit 100 $cm^3$ d'une solution à 80 % de tétrabutylate de zirconium. La pression est alors réduite à 667 Pa et on obtient après 15 h de polycondensation dans ces conditions un élastomère thermoplastique dont les caractéristiques sont réunies dans le tableau 7.

**Exemple 46** (Comparatif)

De manière similaire à l'exemple 45, on fait réagir dans un premier temps 5,4 kg de caprolactame, 2,53 kg d'acide

dodécanedioïque, 2 l d'eau et 22 kg de PTMG de Mn 1000. La même procédure que pour l'exemple 24 est observée pour la synthèse du triséquencé.

On rajoute alors 2,53 kg d'acide dodécanedioïque puis 10 $cm^3$ d'une solution à 80 % de tétrabutylate de zirconium. Après 7 h de polycondensation à 240°C sous une pression de 399 Pa, on obtient un élastomère thermoplastique dont les caractéristiques sont réunies dans le tableau 7.

**Exemple 47**

De manière similaire à l'exemple 46, on fait réagir 6,2 KG de caprolactame, 2,3 kg d'acide dodécanedioïque et 2,7 l d'eau sous pression autogène de 31 bars à 240°C. Après 30 mn dans ces conditions et 1 h de détente jusqu'à pression atmosphérique, on ajoute 20 kg de PTMG de Mn 1000 puis le mélange réactionnel est maintenu 3 h sous balayage d'azote à 240°C.

On ajoute alors 2,3kg d'acide dodécanedioïque et réduit la pression à $6{,}67.10^3$ Pa et la maintient 45 mn avant d'introduire 50 $cm^3$ d'une solution à 80% de tétrabutylate de zirconium et de réduire la pression jusqu'à 133 Pa. Après 8 h 40 de réaction dans ces conditions, on obtient un élastomère thermoplastique dont les caractéristiques sont réunies dans le tableau 7.

**Exemple 48**

Dans un réacteur en acier inoxydable de 100 l muni d'une agitation à ancre, on introduit 4,375 kg de caprolactame, 1,2 kg d'acide dodécanedioïque, 2 l d'eau et 10,4 kg de PTMG de Mn 1000. Après plusieurs purges à l'azote, le contenu est chauffé sous pression autogène jusqu'à 250°C, avec agitation à partir de 200°C. La pression autogène de 27 bars est maintenue 1 h dans ces conditions, puis réduite en 1 h jusqu'à pression atmosphérique en maintenant la température à 250°C.

Après 1 h de réaction sous balayage d'azote, on introduit 10,4 kg de PTMG de Mn 1000 puis 3,6 kg d'acide dodécanedioïque. La pression est ensuite réduite à $13{,}3.10^3$ Pa et maintenue 15 mn pendant que la température est ajustée à 240°C.

On introduit alors 90 $cm^3$ d'une solution à 80 % de tétrabutylate de zirconium, puis la pression est réduite à 133 Pa et on obtient après 3 h 25 de réaction dans ces conditions un élastomère thermoplastique dont les caractéristiques sont dans le tableau 7.

**Exemple 49**

Dans un autoclave en acier de 51 on introduit 663,6g de lauryllactame, 86,4g d'acide dodécanedioïque et 60ml d'eau. La température est portée à 255°C et la pression dans l'autoclave s'établit à 33 bars. Au bout de 4 heures, on effectue une détente pour ramener la pression à 1 bar. Le réacteur est alors mis sous balayage d'azote. On ajoute alors 750g de PTGM diol de $M_n$ 1000 et 4,5g de catalyseur $Zr(OBu)_4$ en solution dans le butanol : concentration 80 % en poids. Le milieu est maintenu sous balayage d'azote pendant 4 heures et 30 minutes à 240°C. On effectue ensuite une mise sous vide du réacteur jusqu'à une pression de 520 mbars. 86,4g d'acide dodécanedioïque (préalablement fondu) sont alors introduits dans le réacteur. 10 minutes après cette introduction, on baisse la pression dans le réacteur jusqu'à une pression de 2 à 1 mbars. Au bout de 1 heure et 30 minutes de réaction dans ces conditions, le réacteur est remis sans azote à la pression normale et le polymère est sorti du réacteur.

Le polymère présente une viscosité inhérente de 1,5 et un point de fusion de 160,4°C.

**Exemple 50**

On opère dans les mêmes conditions opératoires que dans l'exemple 49 ; les proportions des composants utilisés sont indiquées dans le tableau 8. Le niveau de module est porté dans le tableau 9.

**Exemples 51 et 52 (COMPARATIF)**

Les proportions des composants utilisés sont indiquées dans le tableau 8. On met en oeuvre le procédé décrit dans le brevet FR 2.401.497. Les niveaux de modules sont portés dans le tableau 9.

| Exemple | PE2 | | Coupleur | | PA | durée de réaction | POLYMERE FINAL | | | | | | |
|---|---|---|---|---|---|---|---|---|---|---|---|---|---|
| | nature | Mn g/mole | n moles | nature | % mass. | min. | ni dl/g | PA Tf, °C | PE Tf, °C | Mn g/mol | a | b | c |
| 1 | PTMG | 650 | 5 | DDA | 15,22 | 37 | 1,44 | 140,6 | 12,7 | 19200 | 8,33 | 50 | 41,7 |
| 2 | PTMG | 1000 | 1,2 | DDA | 29,13 | 100 | 1,27 | 138,3 | 0,1 | 16500 | 22,7 | 50 | 27,3 |
| 3 | PTMG | 1000 | 2 | DDA | 22,79 | 38 | 1,63 | 139,0 | 5,6 | 21900 | 16,7 | 50 | 33,3 |
| 4 | PTMG | 1000 | 3 | DDA | 17,91 | 22 | 1,26 | 139,4 | 11,6 | 17500 | 12,5 | 50 | 37,5 |
| 5 | PTMG | 1000 | 4 | DDA | 14,76 | 13 | 1,86 | 140,3 | 13,7 | 25000 | 10 | 50 | 40 |
| 6 | PTMG | 1000 | 5 | DDA | 12,54 | 13 | 1,48 | 140,3 | 16,8 | 21400 | 8,33 | 50 | 41,7 |
| 7 | PTMG | 2000 | 2 | DDA | 18,56 | 25 | 1,42 | 140,5 | 17,9 | 19500 | 16,7 | 50 | 33,3 |
| 8 | PTMG | 2000 | 5 | DDA | 8,35 | 27 | 1,58 | 138,1 | 23,9 | 26400 | 8,33 | 50 | 41,7 |
| 9 | PTMG | 2900 | 2 | DDA | 15,90 | 75 | 1,52 | 138,7 | 22,3 | 20500 | 16,7 | 50 | 33,3 |
| 10 | PTMG | 2900 | 5 | DDA | 6,42 | 106 | 1,97 | | 26,3 | 28100 | 8,33 | 50 | 41,7 |
| 11 | PTMG | 1000 | 3 | AA | 17,91 | 95 | 0,52 | 138,5 | 19,8 | 3900 | 12,5 | 50 | 37,5 |
| 12 | PTMG | 1000 | 3 | AA | 17,91 | 130 | 0,89 | 124,9 | 10,9 | 10500 | 12,5 | 50 | 37,5 |
| 13 | PTMG | 1000 | 3 | IA | 17,91 | 98 | 0,40 | 141,9 | 20,7 | 2650 | 12,5 | 50 | 37,5 |
| 14 | PTMG | 1000 | 3 | AZ | 17,91 | 100 | 1,22 | 138,1 | 11,2 | 18800 | 12,5 | 50 | 37,5 |
| 15 | PTMG | 1000 | 3 | TA | 18,55 | 110 | 0,37 | | | 2540 | 12,5 | 50 | 37,5 |
| 16 | PPG | 1000 | 3 | DDA | 17,91 | 200 | 1,07 | 130,8 | -5,4 | 15600 | 12,5 | 50 | 37,5 |
| 17 | EPOL | 2660 | 3 | DDA | 11,23 | 87 | / | 139,0 | -0,6 | insoluble | 12,5 | 50 | 37,5 |

TABLEAU 1 : POLYMERES PREPARES A PARTIR D'UNE MOLE DE TRISEQUENCE DIOL PTMG/PA 12/PTMG 1000/1000/1000 POUR n MOLES DE COUPLEUR DIACIDE ET n-1 MOLES D'OLIGOMERE DIOL PE2

| Exemple | PE2 | | Coupleur | | PA | durée de réaction | POLYMERE FINAL | | | | | | |
|---|---|---|---|---|---|---|---|---|---|---|---|---|---|
| | nature | Mn g/mole | n moles | nature | % mass. | min. | ni dl/g | PA Tf, °C | PE Tf, °C | Mn g/mol | a | b | c |
| 18 | PTMG | 1000 | 2 | DDA | 37,12 | 47 | 0,96 | 156,7 | 5,1 | 12500 | 16,7 | 50 | 33,3 |
| 19 | PTMG | 2000 | 2 | DDA | 31,31 | 24 | 1,01 | 158,1 | 26,8 | 13300 | 16,7 | 50 | 33,3 |
| 20 | PEG | 1500 | 2 | DDA | 33,96 | 93 | 1,03 | 158,0 | 22,6 | 12800 | 16,7 | 50 | 33,3 |
| 21 | PEG | 1500 | 3 | DDA | 26,38 | 120 | 0,99 | 156,2 | 30,3 | 12600 | 12,5 | 50 | 37,5 |

TABLEAU 2 : POLYMERES PREPARES A PARTIR D'UNE MOLE DE TRISEQUENCE DIOL PTMG/PA12/PTMG 1000/2000/1000 POUR n MOLES DE COUPLEUR DIACIDE ET n-1 MOLES D'OLIGOMERE DIOL PE2.

| Exemple | PA 12 | | Coupleur | | PA | durée de réaction | Polymère final | | | | | | |
|---|---|---|---|---|---|---|---|---|---|---|---|---|---|
| | Mn g/mol | LDC | n moles | nature | %mass. | min. | ni dl/g | PA Tf, °C | PE Tf, °C | Mn g/mol | a | b | c |
| 22 | 1070 | AA | 2 | DDA | 24,19 | 20 | 1,28 | 144,2 | 9,2 | 19900 | 16,7 | 50 | 33,3 |
| 23 | 1070 | AA | 5 | DDA | 13,37 | 21 | 1,39 | 140,6 | 16,9 | 17000 | 8,33 | 50 | 41,7 |
| 24 | 4000 | AA | 2,5 | DDA | 50,32 | 47 | 1,06 | 169,3 | 24,6 | 10400 | 14,3 | 50 | 35,7 |
| 25 | 1005 | DDA | 2 | DDA | 23,06 | 20 | 1,49 | 149,0 | 7,1 | 21500 | 16,7 | 50 | 33,3 |
| 26 | 1005 | DDA | 5 | DDA | 12,66 | 20 | 0,99 | 146,8 | 18,3 | 13000 | 8,33 | 50 | 41,7 |
| 27 | 930 | TA | 2 | DDA | 21,72 | 123 | 1,32 | 141,9 | 7,8 | 19300 | 16,7 | 50 | 33,3 |

TABLEAU 3 : POLYMERES PREPARES A PARTIR D'UNE MOLE D'OLIGOAMIDE DIACIDE PA12 POUR n MOLES DE COUPLEUR DIACIDE ET n+1 MOLES DE PTMG DIOL DE Mn 1000.

| Exemple | Coupleur | | Fraction Massique PA % | Réaction à 240°C Durée min | Polymère final | | | | | | |
|---|---|---|---|---|---|---|---|---|---|---|---|
| | n mol | nature | | | ni dl/g | PA Tf °C | PE Tf °C | Mn g/mol | a | b | c |
| 28 | 0,2 | DDA | 45,52 | 23 | 1,35 | 151,0 | -12,9 | 13800 | 41,7 | 50 | 8,33 |
| 29 | 0,5 | DDA | 39,16 | 13 | 1,15 | 150,7 | -7,3 | 18100 | 33,3 | 50 | 16,7 |
| 30 | 0,8 | DDA | 34,37 | 29 | 1,00 | 149,7 | 1,2 | 13600 | 27,8 | 50 | 22,2 |
| 31 | 1,2 | DDA | 29,54 | 26 | 1,37 | 150,2 | 1,6 | 17500 | 22,7 | 50 | 27,3 |
| 32 | 2 | DDA | 23,06 | 20 | 1,49 | 149,0 | 7,1 | 21500 | 16,7 | 50 | 33,3 |
| 33 | 3 | DDA | 18,10 | 37 | 1,12 | 146,8 | 13,0 | 15000 | 12,5 | 50 | 37,5 |
| 34 | 4 | DDA | 14,90 | 29 | 1,33 | 148,2 | 15,2 | 20000 | 10 | 50 | 40 |
| 35 | 5 | DDA | 12,66 | 20 | 0,99 | 146,8 | 18,3 | 13000 | 8,33 | 50 | 41,7 |

TABLEAU 4 : POLYMERES PREPARES A PARTIR D'UNE MOLE DE PA12 DE Mn 10005 POUR n MOLES DE COUPLEUR DDA ET n+1 MOLES DE PTMG DE Mn 1000.

| Exemple | Catalyseur | | Réaction à 240°C | POLYMERE FINAL | | | |
|---|---|---|---|---|---|---|---|
| | nature | qté % poids | Durée min | ni dl/g | PA Tf °C | PE Tf °C | Mn g/mol |
| 36 | / | 0 | 180 | 0,35 | / | 27,1 | 2530 |
| 37 | Sb2O3 | 0,3 | 47 | 1,04 | 135,2 | 15,4 | 12800 |
| 38 | BuSnOHO | 0,3 | 23 | 1,03 | 143,4 | 11,7 | 11800 |
| 39 | (Bu)2SnO | 0,36 | 70 | 0,99 | 139,3 | 13,2 | 10900 |
| 40 | (AcAC)4Zr | 0,3 | 40 | 1,04 | 141,2 | 13,5 | 13200 |

TABLEAU 5 : UTILISATION D'AUTRES CATALYSEURS POUR UN POLYMERE PREPARE A PARTIR DE UNE MOLE DE TRISEQUENCE DIOL DE Mn 3000 POUR DEUX MOLES DE PTMG 1000 ET TROIS MOLES DE DDA.

| Exemple | PA diCOOH | | Fraction Massique PA % | Réaction à 240°C Durée min | Polymère final | | | |
|---|---|---|---|---|---|---|---|---|
| | nature | Mn g/mol | | | ni dl/g | PA Tf °C | PE Tf °C | Mn g/mol |
| 41 | 11 | 750 | 14,16 | 24 | 1,10 | 139,4 | 18,8 | 14800 |
| 42 | 6 | 1060 | 18,91 | 95 | 1,16 | 186,9 | 21,8 | 14800 |

TABLEAU 6 : POLYMERES PREPARES A PARTIR D'UNE MOLE DE PA DIACIDE POUR QUATRE MOLES DE PTMG DIOL DE Mn1000 ET TROIS MOLES DE COUPLEUR DIACIDE DDA.

| Exemple | ni, dl/g | Mw | Tf PA, °C | Tf PE, °C | Shore A à 5s | PA, %mass. |
|---|---|---|---|---|---|---|
| 43 | 1,2 | 25200 | 192 | 27 | 84 | 32,7 |
| 44 | 1,08 | 23000 | (*) | 24 | non mesuré | 31,5 |
| 45 | 1,35 | 29400 | 197 | 29 | 68 | 28,8 |
| 46 | 1,78 | 47400 | (*) | 16 | 57 | 24,4 |
| 47 | 1,82 | 47300 | (*) | 6 | 72 | 28,4 |
| 48 | 1,73 | 36800 | 195 | 18 | 55 | 18,6 |

(*) : pas de point de fusion détectable par DSC

TABLEAU 7

TABLEAU 8

| Composition % massique | EXEMPLE 50 | EXEMPLE 51 | EXEMPLE 52 |
|---|---|---|---|
| OLIGOMERE PA DIACIDE | | | |
| - Lactame 12 | 44,7 | 42,7 | 46,35 |
| - Acide adipique | 3,5 | 7,3 | 3,65 |
| (Mn oligomère PA diacide) | (2000) | (1000) | (2000) |

TABLEAU 8 (suite)

| | | | |
|---|---|---|---|
| OLIGOMERE POLYETHER DIOL | | | |
| - PTMG<br><br>(Mn Oligomère Polyether diol) | 48,3<br><br>(1000) | 50<br><br>(1000) | 50<br><br>(2000) |
| DIACIDE COUPLEUR | | | |
| - Acide adipique<br><br>Tf °C | 3,5<br><br>155°C | 0<br><br>147°C | 0<br><br>160°C |
| | | | |

TABLEAU 9

| Température (en °C) | EXEMPLE 50 (Mpa) | EXEMPLE 51 (Mpa) | EXEMPLE 52 (MPA) |
|---|---|---|---|
| - 80 | 3000 | 2500 | 3200 |
| - 60 | 1300 | 1100 | 1500 |
| - 40 | 500 | 500 | 800 |
| - 20 | 220 | 220 | 500 |
| 0 | 130 | 150 | 300 |
| + 20 | 120 | 120 | 130 |
| + 40 | 100 | 110 | 100 |
| | | | |

Les niveaux de module sont relevés par l'analyse dynamique (appareillage : RSA2 Rheometrick Solid Analyser) à une pulsation de 10 radian/s. L'éprouvette est une éprouvette IFC et le module est mesuré en "Oval Cantilever".

## Revendications

**1.** Procédé de synthèse de polyéther bloc amides répondant à la formule générale suivante :

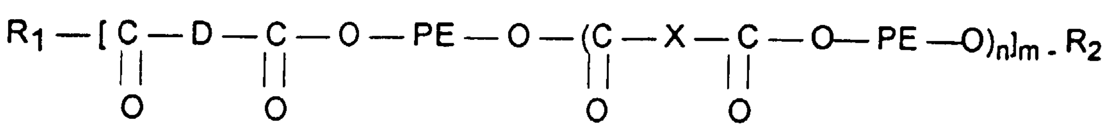

dans laquelle :

- D représente le reste d'un oligamide diacide de Mn compris entre 300 et 8000 et le reste du limitateur diacide,
- PE représente le reste d'un polyétherdiol de Mn compris entre 200 et 5000,
- X représente une chaîne hydrocarbonée (cyclo) aliphatique, aromatique, linéaire ou ramifiée contenant de 3 à 20 atomes de carbone,
- $R_1$ à $R_2$ représentent les extrémités de chaîne et sont respectivement OH et H,
- n est compris entre 0,1 et 10,
- m est en moyenne compris entre 2 et 50,

caractérisé en ce qu'il consiste à faire réagir à l'état fondu un oligoamide diacide A, au moins un oligoéther diol B et au moins un coupleur diacide C de Mn comprise entre 100 et 1000, en proportions permettant de former intermédiairement un triséquencé diol de formule :

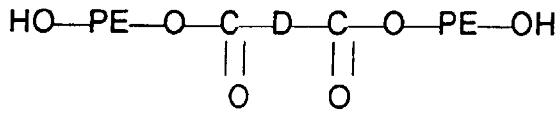

puis à faire réagir ce triséquencé avec la quantité restante de polyéther et avec le coupleur diacide, les pourcentages molaires respectifs totaux, a, b, et c étant tels que :

$$-5 \leq a + c - b \leq + 5 \text{ et } c \geq 3 .$$

2. Procédé selon la revendication 1, caractérisé en ce que les oligoamides diacides sont obtenus par polymérisation de lactames et/ou d'aminoacides, et éventuellement jusqu'à 50 % en poids d'un ou plusieurs diacides, et d'une ou plusieurs diamines en présence d'un limitateur de chaîne diacide ou leurs sels.

3. Procédé selon la revendication 1 ou 2, caractérisé en ce que les polyétherdiols sont choisis parmi le polyéthylène glycol et le polypropylène glycol et/ou le polytétraméthylène glycol et/ou les copolymères statistiques et/ou séquencés d'éthylène glycol et/ou de 1,2- ou 1,3- propylène glycol et/ou de 1,2-,1,3- ou 1,4-butylène glycol ainsi que les mélanges de polyétherdiols avec d'autres composés diols de Mn compris entre 250 et 4 000.

4. Procédé selon l'une quelconque des revendications 1 à 3, caractérisé en ce que les coupleurs di-acides de formule HOOCXCOOH sont choisis parmi les acides adipique, isophtalique, azélaïque, sébacique, 4,4'-diphényl éther dicarboxylique et l'acide dodécanedioïque.

5. Procédé selon l'une quelconque des revendications 1 à 4, caractérisé en ce que leur viscosité inhérente est comprise entre 0,6 et 3,5 dl/g, la mesure étant effectuée à 25° C dans le m-cresol avec une concentration initiale de 0,5 g de polymère pour 100 g de m-cresol.

6. Procédé de synthèse selon l'une quelconque des revendications précédentes, caractérisé en ce que, dans une première étape, on prépare l'oligoamide (A) en présence de tout ou partie de l'oligoéther.

7. Procédé de synthèse selon la revendication 6, caractérisé en ce que au moins un catalyseur d'estérification est ajouté au cours de la première étape.

**Patentansprüche**

1. Verfahren zur Herstellung von Polyether-Blockamiden der folgenden allgemeinen Formel:

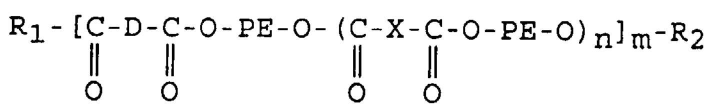

in der:

- D den Rest einer Oligoamid-disäure mit einem Mn-Wert von 300 bis 8000 und den Rest einer kettenbegrenzenden Disäure bedeutet,
- PE den Rest eines Polyetherdiols mit einem Mn-Wert von 200 bis 5000 bedeutet,
- X eine (cyclo)aliphatische, aromatische, lineare oder verzweigte Kohlenwasserstoffkette mit 3 bis 20 Kohlenstoffatomen darstellt,
- $R_1$ und $R_2$ die Kettenenden bedeuten und OH bzw. H darstellen,
- n einen Wert von 0,1 bis 10 hat und
- m durchschnittlich 2 bis 50 bedeutet,

dadurch gekennzeichnet, daß man in geschmolzenem Zustand eine Oligoamid-disäure A, mindestens ein Oligoetherdiol B und mindestens eine Kupplungsmittel-Disäure C mit einem Mn-Wert von 100 bis 1000 in Mengenverhältnissen umsetzt, die als Zwischenprodukt ein trisequentielles Diol der folgenden Formel ergeben:

$$HO-PE-O-\underset{\underset{O}{\|}}{C}-D-\underset{\underset{O}{\|}}{C}-O-PE-OH$$

und anschließend das trisequentielle Produkt mit der restlichen Polyethermenge und der Kupplungsmittel-Disäure umsetzt, wobei die jeweiligen prozentualen Gesamtmolanteile a, b und c folgende Bedingungen erfüllen:

$$-5 \leq a + c - b \leq +5 \text{ und } c \geq 3 \cdot$$

**2.** Verfahren nach Anspruch 1, dadurch gekennzeichnet, daß die Oligoamid-disäuren durch Polymerisation von Lactamen und/oder Aminosäuren und gegebenenfalls bis zu 50 Gew.-% einer oder mehrerer Disäuren und einer oder mehrerer Diamine in Gegenwart einer kettenbegrenzenden Disäure oder von deren Salzen erhalten worden sind.

**3.** Verfahren nach Anspruch 1 oder 2, dadurch gekennzeichnet, daß die Polyetherdiole ausgewählt sind unter: Polyethylenglykol und Polypropylenglykol und/oder Polytetramethylenglykol und/oder statistische und/oder sequentielle Copolymere von Ethylenglykol und/oder 1,2- oder 1,3-Propylenglykol und/oder 1,2-, 1,3- oder 1,4-Butylenglykol sowie Gemische von Polyetherdiolen mit anderen Diolverbindungen mit einem Mn-Wert von 250 bis 4000.

**4.** Verfahren nach einem der Ansprüche 1 bis 3, dadurch gekennzeichnet, daß die Disäure-Kupplungsmittel der Formel HOOCXCOOH unter Adipinsäure, Isophthalsäure, Azelainsäure, Sebacinsäure, 4,4'-Diphenyletherdicarbonsäure und Dodecandisäure ausgewählt sind.

**5.** Verfahren nach einem der Ansprüche 1 bis 4, dadurch gekennzeichnet, daß die logarithmische Viskositätszahl 0,6 bis 3,5 dl/g beträgt, gemessen bei 25°C in m-Cresol bei einer Anfangskonzentration von 0,5 g Polymerem pro 100 g m-Cresol.

**6.** Verfahren nach einem der vorstehenden Ansprüche, dadurch gekennzeichnet, daß man in einer ersten Stufe das Oligoamid (A) in Gegenwart der Gesamtmenge oder eines Teils des Oligoethers herstellt.

**7.** Verfahren nach Anspruch 6, dadurch gekennzeichnet, daß im Verlauf der ersten Stufe mindestens ein Veresterungskatalysator zugesetzt wird.

## Claims

**1.** Process for the synthesis of block polyetheramides, which correspond to the following general formula:

$$R_1 - [\underset{\underset{O}{\|}}{C} - D - \underset{\underset{O}{\|}}{C} - O - PE - O - (\underset{\underset{O}{\|}}{C} - X - \underset{\underset{O}{\|}}{C} - O - PE - O)_n]_m - R_2$$

in which:

- D denotes the residue of an oligoamidediacid of Mn of between 300 and 8000 and the residue of the diacidic limiter,
- PE denotes the residue of a polyetherdiol of Mn of between 200 and 5000,
- X denotes a linear or branched, (cyclo)aliphatic or aromatic hydrocarbon chain containing from 3 to 20 carbon atoms,
- $R_1$ and $R_2$ denote the chain ends and are OH and H respectively,
- n is between 0.1 and 10,
- m is on average between 2 and 50,

characterized in that it consists in reacting, in the melt, a diacidic oligoamide A, at least one oligoetherdiol B and

at least one diacidic coupler C of Mn between 100 and 1000, in proportions allowing a triblock diol of formula:

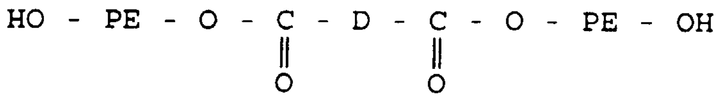

to be formed as an intermediate and in then reacting this triblock with the remaining quantity of polyether and with the diacidic coupler, the total respective molar percentages, a, b and c being such that:

$$-5 \leq a + c - b \leq +5 \text{ and } c \geq 3.$$

**2.** Process according to Claim 1, characterized in that the oligoamidediacids are obtained by polymerization of lactams and/or of amino acids and optionally up to 50 % by weight of one or more diacids and of one or more diamines in the presence of a diacidic chain limiter or their salts.

**3.** Process according to Claim 1 or 2, characterized in that the polyetherdiols are chosen from polyethylene glycol and polypropylene glycol and/or polytetramethylene glycol and/or random and/or block copolymers of ethylene glycol and/or of 1,2- or 1,3-propylene glycol and/or of 1,2-, 1,3- or 1,4-butylene glycol and mixtures of polyetherdiols with other diol compounds of Mn of between 250 and 4000.

**4.** Process according to any one of Claims 1 to 3, characterized in that the diacidic couplers of formula HOOCXCOOH are chosen from adipic, isopththalic, azelaic, sebacic and 4,4'-diphenyl ether dicarboxylic acids and dodecanedioic acid.

**5.** Process according to any one of Claims 1 to 4, characterized in that their inherent viscosity is between 0.6 and 3.5 dl/g, the measurement being performed at 25°C in m-cresol at an initial concentration of 0.5g of polymer per 100g of m-cresol.

**6.** Process for synthesis according to any one of the preceding claims, characterized in that, in a first stage, the oligoamide (A) is prepared in the presence of all or part of the oligoether.

**7.** Process for synthesis according to Claim 6, characterized in that at least one esterification catalyst is added during the first stage.